# EUROPÄISCHE PATENTSCHRIFT

(11) **EP 3 017 222 B1**
(45) Veröffentlichungstag und Bekanntmachung des Hinweises auf die Patenterteilung: **04.07.2018**
(21) Anmeldenummer: 15730975.8
(22) Anmeldetag: 29.05.2015
(51) Int. Cl.: B23K 15/00, B23K 15/10, F16K 27/00, F16K 27/02, F16K 27/10

(54) **VERFAHREN ZUR HERSTELLUNG EINES GEHÄUSEMITTELTEILS EINES HOCHDRUCK-ABSPERRSCHIEBERS**
METHOD FOR PRODUCING A MIDDLE SECTION OF A HOUSING OF A HIGH PRESSURE SHUT-OFF VALVE
PROCÉDÉ DE FABRICATION D'UNE CARRURE D'UNE VANNE D'ARRÊT DE HAUTE PRESSION

(30) Priorität: 25.09.2014 DE 102014013998
(43) Veröffentlichungstag der Anmeldung: 11.05.2016
(73) Patentinhaber: STAHL-ARMATUREN PERSTA Gesellschaft mit beschränkter Haftung, 59581 Warstein (DE)
(72) Erfinder: WESTERWELL, Klaus, 58762 Altena (DE); FLOER, Elmar, 59597 Bad Westerkotten (DE)
(74) Vertreter: Schneiders, Josef
(86) Internationale Anmeldenummer: PCT/EP2015/062021
(87) Internationale Veröffentlichungsnummer: WO 2016/045804

(56) Entgegenhaltungen:
- EP-A2- 1 132 671
- DE-A1- 2 807 740

## Beschreibung

Die Erfindung betrifft ein Verfahren zur Herstellung eines Gehäusemittelteils eines Hochdruck-Absperrschiebers aus hochwarmfestem Stahl, bei welchem zwei gesenkgeschmiedete Gehäusemittelteilhalbschalen mit angeschmiedeten Stutzen durch ein Elektronenstrahl-Schweißverfahren ohne Schweißzusatzwerkstoff durch eine stumpfe Schweißnaht miteinander verbunden werden, die in einer quer zu den Rohrstutzen verlaufenden, das Gehäusemittelteil unterteilenden Ebene verläuft.

Ein solches Verfahren ist beispielsweise aus der DE 100 10 367 B4 oder der US 3 913 887 A bekannt. Es stößt jedoch in Anbetracht gesteigerter Anforderungen inzwischen auf Probleme, und zwar aus folgendem Grund:
In der jüngeren Vergangenheit kommen in zunehmendem Umfang für die Versorgung mit elektrischer Energie sogenannte erneuerbare Energien aus Wind- und Solarkraftwerken zum Einsatz. Weil diese Energiequellen nicht kontinuierlich zur Verfügung stehen, werden für die unvermeidbaren Versorgungslücken Wärmekraftwerke benötigt, deren Leistung je nach Bedarf gegebenenfalls mehrmals am Tag schnell herauf und herunter gefahren werden kann. Das hat zur Folge, dass alle wärmeführenden Armaturen dieser Wärmekraftwerke nicht nur den für einen guten Wirkungsgrad erforderlichen hohen Temperaturen von mehr als 600°C und Drücken von mehr als 200 bar Stand halten müssen, sondern zusätzlich wechselnden Temperaturen mit steilen Temperaturgradienten ausgesetzt sind. Aus diesem Grund kommen für die Armaturen von solchen Wärmekraftwerken ausschließlich hochwarmfeste Stähle zum Einsatz, insbesondere martensitische 9 bis 12%ige Chromstähle, z.B. X 10 CrMoVNb9-1 (Werkstoffnummer 1.4903, Kurzbezeichnung P91) oder X10CrWMoVNb9-2 (Werkstoffnummer 1.4901, Kurzbezeichnung P92). Gegebenenfalls sind auch andere hochwarmfeste Stähle verwendbar.

Die oben genannten neuen Lastkollektive sind insbesondere für alle Schweißnähte an den Bauteilen aus hochwarmfestem Stahl problematisch. Bei diesen Stählen ergibt sich nämlich aufgrund von deren Gefügekomplexität ein erheblicher Abfall der Zeitstandfestigkeit in den Wärmeeinflusszonen (WEZ) der Schweißnähte, der sich auch durch eine lokale Wärmebehandlung der Schweißnähte nicht beseitigen lässt. Aus diesem Grund verlangen die einschlägigen Prüf- und Überwachungsvorschriften für druckbelastete, geschweißte Gehäuse aus solchen hochwarmfesten Stählen die Berücksichtigung eines ausreichenden Schweißnahtfaktors WSF (weld strength factor) und eine besondere Zulassung für den gegebenenfalls verwendeten, die Schweißnaht ausfüllenden Schweißzusatzwerkstoff.

Der Schweißnahtfaktor WSF wird mit zunehmender Prüftemperatur schnell erheblich kleiner. So ist beispielsweise für einen 12%igen CrMoV-Stahl bei einer Prüftemperatur von 500°C ein Schweißnahtfaktor von WSF = 0,8 und bei einer Prüftemperatur von 600°C ein Schweißnahtfaktor von WSF = 0,5 erforderlich. Das bedeutet, dass bei Prüftemperaturen von über 600°C die Wandstärke - zumindest im Bereich der Schweißnähte - verdoppelt werden muss. Das führt natürlich zu einer starken Gewichtserhöhung.

Die aufgrund des Schweißnahtfaktors WSF erforderliche Verdickung der Wände beeinträchtigt aber die Zeitstandfestigkeit des Gehäuses, wenn dieses häufig großen Temperaturschwankungen mit steilen Temperaturgradienten ausgesetzt ist. Bei dicken Wänden führen nämlich die sich ausbildenden Temperaturunterschiede von innen nach außen bzw. von außen nach innen zu starken, mehrachsigen Spannungen im Inneren des Materials, die die Zeitstandfestigkeit negativ beeinflussen. Die Aufgrund des ungünstigen Schweißnahtfaktors erforderlichen Wandverdickungen machen also den Gehäusekörper empfindlich gegen schnelle Temperaturschwankungen.

Beim Einsatz von Elektronenstrahlschweißverfahren kommt man zwar ohne Schweißzusatzwerkstoffe aus, so dass die schwierige Auswahl eines geeigneten Schweißzusatzwerkstoffes überflüssig ist. Aber auch beim Elektronenstrahlschweißen entstehen entlang der Schweißnaht eng begrenzte Wärmeeinflusszonen (WEZ), in denen die Zeitstandfestigkeit beeinträchtigende innere Spannungen und Gefügeveränderungen auftreten. Um diese inneren Spannungen so gut wie möglich rückgängig zu machen, ist es beispielsweise aus der DE 10 2013 009 209 bekannt, das Werkstück zumindest im Bereich der Schweißnaht bis auf die Anlaßtemperatur zu erwärmen. Die neuesten mit Neutronendiffraktometrie durchgeführten Untersuchungen an solchen mit Elektronenstrahlschweißverfahren hergestellten Schweißnähten haben ergeben, dass im Nahbereich von solchen Schweißnähten selbst dann noch die Zeitstandfestigkeit beeinträchtigende Spannungen verbleiben, wenn versucht wird, diese Schweißnähte nachträglich mit den nach dem Stande der Technik üblichen lokalen Wärmebehandlungen spannungsfrei zu machen (vgl. Charakterisation of Residual Stress in Electron Beam welded P91 Plates by Neutron Diffraction", veröffentlicht im International Journal of Metalurgical Engineering 2013, 2 (1): 79-84.

Aus diesem Grund schreiben die einschlägigen Prüf- und Überwachungsvorschriften für druckbelastete geschweißte Gehäuse die oben diskutierten Schweißnahtfaktoren auch dann vor, wenn die Schweißnähte im Elektronenstrahlschweißverfahren ohne Schweißzusatzwerkstoffe hergestellt werden. Das hat zur Folge, dass man nunmehr durch die oben diskutierten neuen Lastkollektive an die Grenze des technisch Machbaren gestoßen ist.

Dieses Dilemma macht es nahezu unmöglich, mit den nach dem Stande der Technik zur Verfügung stehenden Mitteln ein Gehäusemittelteil für einen Hochdruck-Absperrschieber der angegebenen Art herzustellen, welches den oben diskutierten neuen Lastkollektiven ausreichend lange Stand hält. Verschiedene Versuche, das Gehäusemittelteil einteilig herzustellen, und zwar durch Fräsen aus einem großen Block oder durch Schmieden des kompletten Hohlkörpers, haben sich als kaum bezahlbar und auch technisch unbrauchbar erwiesen, weil es Schwierigkeiten macht, bei einer ausreichend dünnwandigen Ausführung die im Innenraum des Gehäusemittelteils erforderlichen Sitzflächen (Dichtflächen) für die Schieberplatten anzubringen. Die dafür im Inneren des Gehäusemittelteils erforderlichen Nuten oder Schweißnähte beeinträchtigen nämlich ebenfalls die Zeitstandfestigkeit in erheblichem Maße.

Es ist deshalb Aufgabe der Erfindung, das Verfahren der eingangs genannten Art dahingehend weiterzubilden, dass mit einfachen Mitteln die Herstellung eines wesentlich leichteren Gehäusemittelteiles ermöglicht wird, welches auch bei häufigen Temperaturwechseln mit steilen Temperaturgradienten eine ausreichende Zeitstandfestigkeit hat.

Zur Lösung dieser Aufgabe schlägt die Erfindung ausgehend von dem Verfahren der eingangs genannten Art vor, dass die Wanddicke der Gehäusehalbschalen insgesamt unter Zugrundelegung eines Schweißnahtfaktors WSF = 1 ausgelegt wird und dass nach der Herstellung der Schweißnaht das gesamte Gehäusemittelteil einer durchgreifenden Wärmebehandlung mit Erwärmen bis über die Umwandlungstemperatur, Abschrecken und Anlassen unterzogen wird.

Die Erfindung nutzt zunächst den Umstand, dass man beim Elektronenstrahlschweißen auch bei großer Schweißnahttiefe ohne jeden Schweißzusatzwerkstoff auskommt, weil der an den Schweißnahtflanken der stumpfen Schweißnaht anstehende Grundwerkstoff unmittelbar miteinander verschmolzen wird. Dadurch, dass bei diesem Schweißverfahren die Schmelzwärme auf sehr engem Raum fokussiert ist, ergeben sich weiterhin neben den Schweißnähten nur sehr schmale Wärmeeinflusszonen (WEZ). Durch die erfindungsgemäß abschließend vorgesehene durchgreifende Wärmebehandlung mit Erwärmen bis über die Umwandlungstemperatur, Abschrecken und Anlassen, die eine komplette Neuvergütung des fertig geschweißten Gehäusemittelteiles bedeutet, gelingt es, in dem Grundwerkstoff über die Schweißnaht hinweg ein neues, ungestörtes Vergütungsgefüge herzustellen, so dass die Schweißnaht völlig verschwindet und mit den üblichen Gefügeuntersuchungen nicht mehr als solche feststellbar ist. Aus diesem Grund ist es erstmals möglich und zulässig, die Wanddicken dieses Gehäusemittelteiles insgesamt unter Zugrundlegung eines Schweißnahtfaktors WSF = 1 auszulegen. Das bedeutet, dass dieses geschweißte Gehäusemittelteil keine schweißnahtbedingten Wandverdickungen mehr benötigt, dementsprechend erheblich leichter ausgeführt werden kann, als die herkömmlichen elektronenstrahlgeschweißte Gehäusemittelteile und außerdem wegen seiner insgesamt dünneren Wände den oben dargelegten neuen Lastkollektiven besser Stand hält. Gegenüber den bekannten Verfahren zur Herstellung von nahtlosen Gehäusemittelteilen durch Hohlschmieden oder Fräsen aus einem Block ist das Verfahren gemäß der Erfindung vom Fertigungsaufwand hier deutlich kostengünstiger und gestattet neben einer erheblichen Gewichtseinsparung eine dem Bedarf besser entsprechende Ausgestaltung der Innenseiten des Gehäuses mit eingeschmiedeten Sitzflächen und Führungseinrichtungen für die Schieberplatten.

Dementsprechend sieht das Verfahren gemäß der Erfindung vor, dass beim Gesenkschmieden die Gehäusemittelteilhalbschalen einstückig einschließlich der Sitzflächen und der Stutzen geschmiedet werden. Das hat den besonderen Vorteil, dass nachträglich keine Ausnehmungen für Sitzringe eingebracht zu werden brauchen, die oft der Ausgangspunkt für Rissbildungen sind.

Weiterhin ist vorgesehen, dass beim Gesenkschmieden an die Gehäusemittelteilhalbschalen einstückig Gehäusehalshalbschalen angeschmiedet werden und dass beim Elektronenstrahlschweißen die mit angeschmiedeten Gehäusehalshalbschalen versehenen Gehäusemittelteilhalbschalen zu einem Gehäuse mit Hals verschweißt werden, wobei die stumpfen Schweißnähte zwischen den beiden Gehäusemittelteilhalbschalen und den beiden Gehäusehalshalbschalen in der gleichen Ebene verlaufen. Hierdurch wird es überflüssig, nachträglich einen Gehäusehals anschweißen zu müssen, was bei einstückig gefertigten Gehäusemittelteilen bisher unumgänglich notwendig war. Dadurch, dass die stumpfen Schweißnähte von Gehäusemittelteilhalbschalen und Gehäusehalshalbschalen in der gleichen Ebene liegen, können die Schweißnähte gewissermaßen in einem Zuge mit einer einzigen Aufspannung in der Schweißvorrichtung ausgeführt werden.

In die Innenseiten der Gehäusehalshälften können beim Verfahren gemäß der Erfindung auch gleich die Nuten für die Aufnahme eines Stützrings für einen selbstdichtenden Gehäuseverschlussdeckel eingearbeitet werden.

Das Gleiche gilt für die innen erforderlichen Führungselemente an den Gehäusemittelteilhalbschalen und/oder den Gehäusehalshalbschalen für die Führung der Schieberplatten des Hochdruck-Absperrschiebers.

Ausführungsbeispiele der Erfindung werden im Folgenden anhand der Zeichnung näher erläutert. Es zeigen:

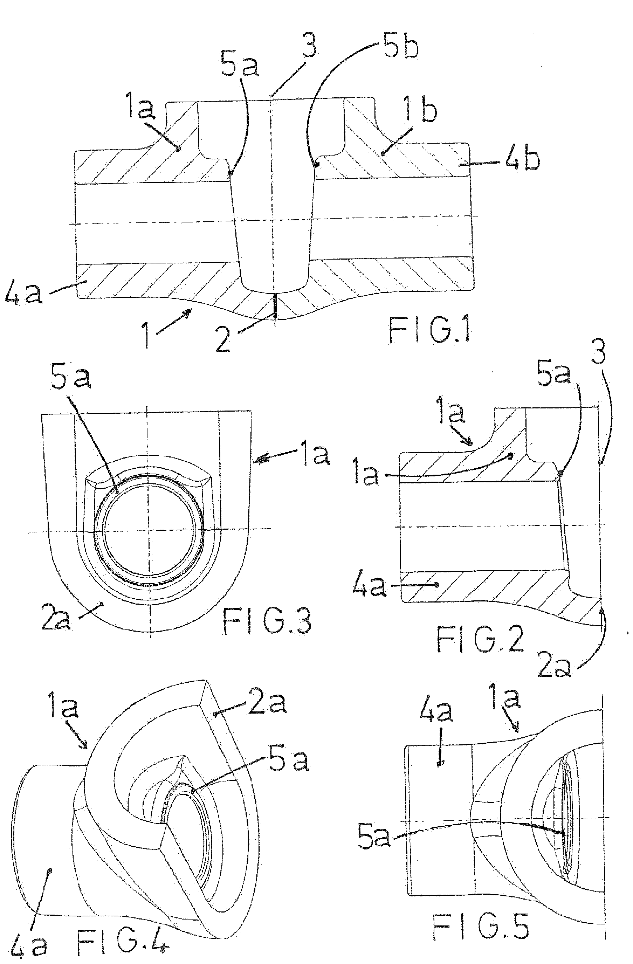

- Fig. 1:: Im Längsschnitt ein Gehäusemittelteil gemäß der Erfindung;
- Fig. 2:: einen Längsschnitt durch die linke Gehäusemittelteilhalbschale von Figur 1;
- Fig. 3:: eine Ansicht zu Figur 2 in Durchströmungsrichtung gesehen;
- Fig. 4:: perspektivisch die Gehäusemittelteil-halbschale gemäß den Figuren 2 und 3;
- Fig. 5:: eine Draufsicht zu Figur 2 von oben ;
- Fig. 6:: im Längsschnitt ein Gehäuse mit Gehäusehals, hergestellt nach dem Verfahren der Erfindung;
- Fig. 7:: einen Längsschnitt durch die linke Gehäusehalbschale mit Hals gemäß Figur 6;
- Fig. 8:: eine Ansicht zu Figur 7 in Durchflussrichtung gesehen;
- Fig. 9:: eine Draufsicht zu Figur 7 von oben;
- Fig. 10:: perspektivisch die Gehäusehalbschale gemäß Figur 7;
- Fig. 11:: im Längsschnitt ein Gehäuse mit Hals in einer abgewandelten Ausführungsform, hergestellt nach dem Verfahren gemäß der Erfindung;
- Fig. 12:: eine Ansicht zu Figur 11 in Durchströmungsrichtung gesehen.

In der Zeichnung ist das aus hochwarmfestem Stahl hergestellte Gehäusemittelteil eines Hochdruck-Absperrschiebers in seiner Gesamtheit mit dem Bezugszeichen 1 bezeichnet. Es besteht aus zwei Gehäusemittelteilhalbschalen 1a und 1b, die entlang einer stumpfen Schweißnaht 2 mit Schweißnahtflanken 2a und 2b durch Elektronenstrahlschweißen ohne Schweißzusatzwerkstoff miteinander verschweißt sind. Die stumpfe Schweißnaht 2 verläuft in einer quer zur Durchströmungsrichtung des Hochdruck-Absperrschiebers verlaufenden Ebene 3, die das Gehäusemittelteil 1 etwa in der Mitte unterteilt.

Die Gehäusemittelteilhalbschalen 1a und 1b werden nach dem Verfahren gemäß der Erfindung im Gesenk geschmiedet. Sie sind für eine solche Bearbeitung im Gesenk besonders gut geeignet, weil sie von entgegengesetzten Seiten her großflächig zugänglich sind.

Die Wände der Gehäusemittelteilhalbschalen 1a und 1b werden unter Berücksichtigung der statischen, thermischen und thermodynamischen Belastungen so dünn wie möglich ausgeführt und haben insbesondere im Bereich der Schweißnahtflanken 2a und 2b keine Materialverdickungen. Die Wanddicken werden also insgesamt unter Zugrundelegung eines Schweißnahtfaktors WSF = 1 ausgelegt.

Wie weiterhin aus der Zeichnung zu ersehen ist, sind die beiden Gehäusemittelteilhalbschalen 1a und 1b mit angeschmiedeten, rohrförmigen Stutzen 4a und 4b versehen und an ihren Innenseiten mit einstückig eingeschmiedeten, die Stutzen 4a bzw. 4b umgebenden Sitzflächen 5 versehen.

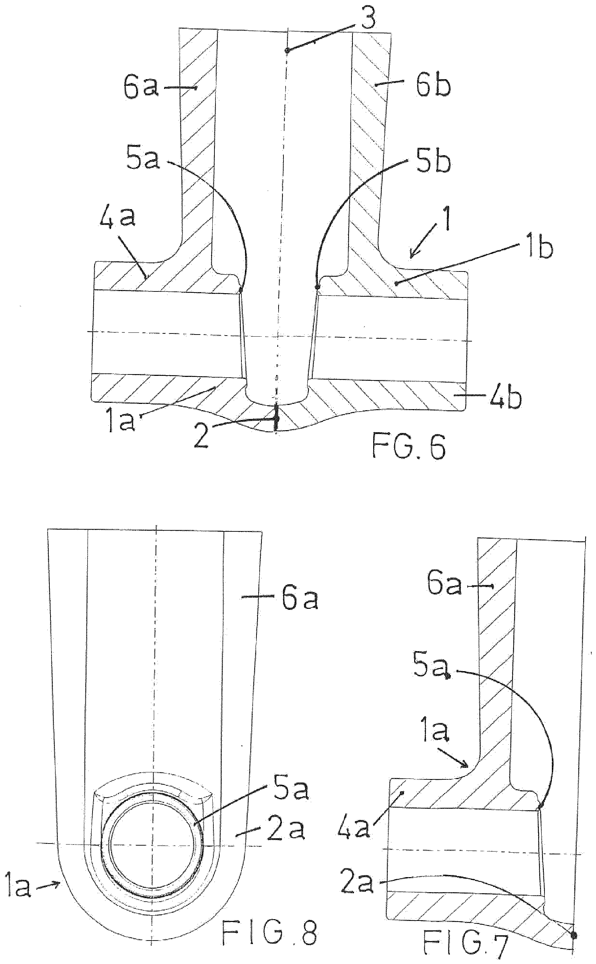

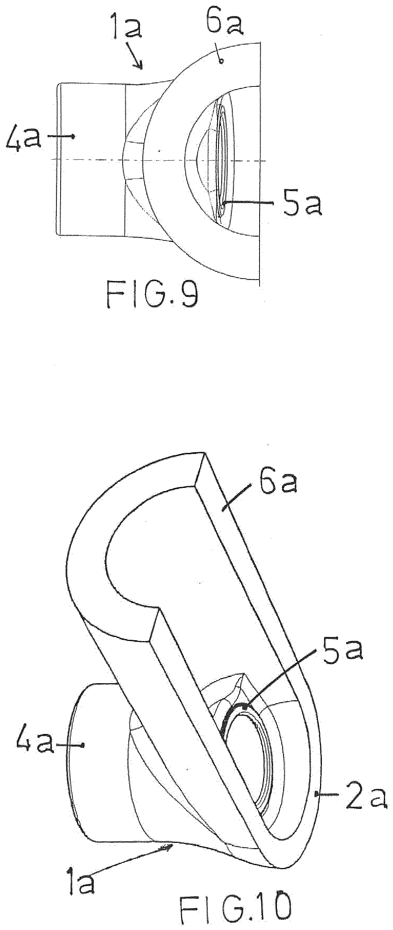

Wie weiterhin aus den Figuren 6 bis 10 und den Figuren 11 und 12 hervorgeht, können die Gehäusemittelteilhalbschalen 1a und 1b im Gesenkschmiedeverfahren auch mit angeschmiedeten Gehäusehalshalbschalen 6a und 6b versehen werden, die ähnlich wie die Gehäusemittelteilhalbschalen 1a und 1b durch Elektronenstrahlschweißen ohne Schweißzusatzwerkstoff zu einem das Gehäusemittelteil 1 nach oben verlängernden Gehäusehals 6 verbunden werden. Dabei verlaufen die die Gehäusehalshalbschalen 6a und 6b verbindenden stumpfe Schweißnähte in der gleichen Ebene, wie die die Gehäusemittelteilhalbschalen 1a und 1b verbindende Schweißnaht 2.

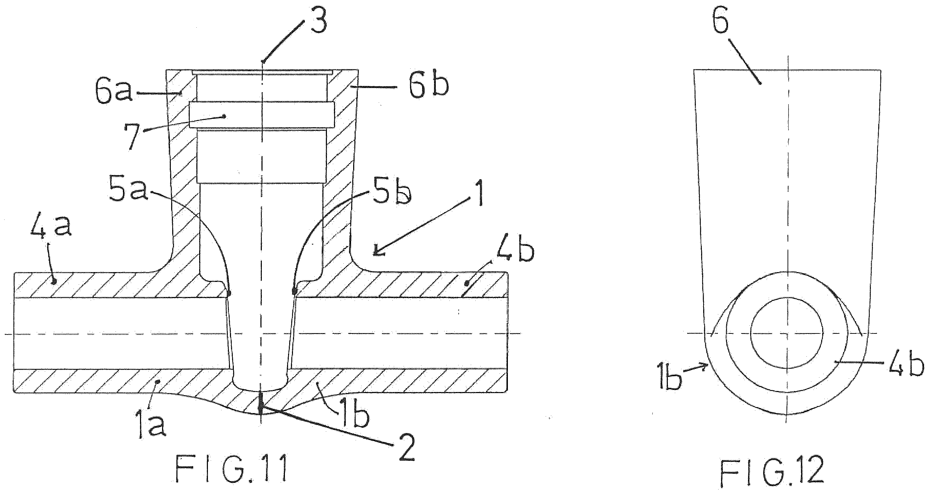

Wie aus Figur 11 weiterhin ersichtlich ist, können in die Innenseiten dieser Gehäusehalshalbschalen 6a und 6b Nuten 7 eingeschmiedet werden, die zum Abstützen eines nicht dargestellten, den Gehäusehals 6 nach oben abdichtenden Deckelverschlusses dienen. Ebenso können die Gehäusemittelteilhalbschalen 1a und 1b und/oder die Gehäusehalshalbschalen 6a und 6b mit im Einzelnen nicht dargestellten, eingeschmiedeten Führungselementen für die Schieberplatten des Hochdruck-Absperrschiebers versehen werden.

Zur Vorbereitung des Schweißvorgangs durch Elektronenstrahlschweißen werden zunächst die miteinander zu verschweißenden Flächen glatt geschliffen. Bei dem sich anschließenden Schweißvorgang werden die stumpf aneinander anliegenden Flanken ohne Schweißzusatzwerkstoff unmittelbar miteinander verschmolzen. Die dafür erforderliche Wärme wird mittels eines Elektronenstrahls in den Spalt zwischen den glattgeschliffenen Flanken eingetragen.

Das fertig geschweißte Gehäuse wird anschließend insgesamt einer durchgreifenden Wärmebehandlung mit Erwärmen über die Umwandlungstemperatur, Abschrecken und Anlassen unterzogen. Bei dieser kompletten Neuvergütung des geschweißten Gehäuses, die nach den üblichen Vergütungsregeln des betreffenden hochwarmfesten Stahls durchgeführt wird, entsteht auch über die Schweißnähte hinweg ein ungestörtes Vergütungsgefüge. Das so hergestellte Gehäuse hat im Ergebnis die Eigenschaften eines aus dem gleichen Werkstoff hergestellten nahtlosen Gehäuses.

## Patentansprüche

1. Verfahren zum Herstellen eines Gehäusemittelteils eines Hochdruck-Absperrschiebers aus hochwarmfestem Stahl, bei welchem zwei gesenkgeschmiedete Gehäusemittelteilhalbschalen (1a, 1b) mit angeschmiedeten Stutzen (4a, 4b) durch ein Elektronenstrahl-Schweißverfahren ohne Schweißzusatzwerkstoff durch eine stumpfe Schweißnaht (2) miteinander verschweißt werden, die in einer quer zu den Rohrstutzen (4a, 4b) verlaufenden, das Gehäusemittelteil (1) unterteilenden Ebene (3) verläuft, **dadurch gekennzeichnet, dass** die Wanddicken der Gehäusemittelteilhalbschalen (1a, 1b) insgesamt unter Zugrundelegung eines Schweißnahtfaktors WSF = 1 ausgelegt werden, und dass nach dem Herstellen der Schweißnaht (2) das gesamte Gehäusemittelteil (1) einer durchgreifenden Wärmebehandlung mit Erwärmen bis über die Umwandlungstemperatur, Abschrecken und Anlassen unterzogen wird.

2. Verfahren nach Anspruch 1, **dadurch gekennzeichnet, dass** beim Gesenkschmieden die Gehäusemittelteilhalbschalen (1a, 1b) einstückig einschließlich der Sitzflächen (5a, 5b) und der Stutzen (4a, 4b) geschmiedet werden.

3. Verfahren nach den Ansprüchen 1 und 2, **dadurch gekennzeichnet, dass** beim Gesenkschmieden an die Gehäusemittelteilhalbschalen (1a, 1b) einstückig Gehäusehalshalbschalen (6a, 6b) angeschmiedet werden, und dass beim Elektronenstrahlschweißen die mit angeschmiedetem Gehäusehalshalbschalen (6a, 6b) versehenen Gehäusemittelteilhalbschalen (1a, 1b) zu einem Gehäuse mit Hals verschweißt werden, wobei die Elektronenstrahlschweißnähte zwischen den beiden Gehäusemittelteilhalbschalen (1a, 1b) und den beiden Gehäusehalshalbschalen (6a, 6b) in der gleichen Ebene verlaufen.

4. Verfahren nach Anspruch 3, **dadurch gekennzeichnet, dass** beim Gesenkschmieden in die Innenseiten der Gehäusehalshalbschalen (6a, 6b) Nuten (7) für die Aufnahme eines Stützrings eines selbstdichtenden Gehäusehalsdeckelverschlusses eingebracht werden.

5. Verfahren nach Anspruch 3, **dadurch gekennzeichnet, dass** beim Gesenkschmieden an den Innenseiten der Gehäusemittelteilhalbschale (1a, 1b) und/oder der Gehäusehalshalbschalen (6a, 6b) Führungselemente für die Schieberplatten des Hochdruck-Absperrschiebers eingeschmiedet werden.

## Claims

1. A method for producing a central housing part of a high-pressure slide gate valve from high-temperature steel, in the case of which two die-forged central-housing-part half-shells (1a, 1b) with forged-on connectors (4a, 4b) are welded to one another, using electron-beam welding without any welding filler material, by a butt weld seam (2), which runs in a plane (3) which runs transversely to the connectors (4a, 4b) and subdivides the central housing part (1), **characterized in that** the wall thicknesses of the central-housing-part half-shells (1a, 1b) are designed overall on the basis of a weld strength factor WSF = 1, and **in that**, once the weld seam (2) has been produced, the entire central housing part (1) is subjected to a rigorous heat treatment involving heating to beyond the transformation temperature, quenching and tempering.

2. The method as claimed in claim 1, **characterized in that**, during die forging, the central-housing-part half-shells (1a, 1b) are forged in one piece, including the seat surfaces (5a, 5b) and the connectors (4a, 4b).

3. The method as claimed in claims 1 and 2, **characterized in that**, during die forging, housing-neck half-shells (6a, 6b) are forged in one piece onto the central-housing-part half-shells (1a, 1b), and **in that**, during electron-beam welding, the central-housing-part half-shells (1a, 1b), provided with forged-on housing-neck half-shells (6a, 6b), are welded to form a housing with a neck, wherein the electron-beam weld seams run in the same plane between the two central-housing-part half-shells (1a, 1b) and the two housing-neck half-shells (6a, 6b).

4. The method as claimed in claim 3, **characterized in that**, during die forging, grooves (7) for accommodating a supporting ring of a self-sealing housing-neck cover closure are made in the inner sides of the housing-neck half-shells (6a, 6b).

5. The method as claimed in claim 3, **characterized in that**, during die forging, guide elements for the slide plates of the high-pressure slide gate valve are forged into the inner sides of the central-housing-part half-shell (1a, 1b) and/or of the housing-neck half-shells (6a, 6b).

## Revendications

1. Procédé de fabrication d'une carrure pour une vanne d'arrêt haute pression en acier réfractaire, dans lequel deux demi-coques de carrure (1a, 1b) estampées sont soudées ensemble avec des supports forgés (4a, 4b) par un procédé de soudage à faisceau d'électrons sans matériau d'apport de soudure par un cordon de soudure de forme émoussée (2), qui s'étend dans un plan (3) s'étendant transversalement aux supports tubulaires (4a, 4b) et divisant la carrure (1), **caractérisé en ce que** les épaisseurs de paroi des demi-coques de carrure (1a, 1b) sont réalisées dans l'ensemble en posant un facteur de cordon de soudure WSF = 1, et **en ce qu'**après la fabrication du cordon de soudure (2), l'ensemble de la carrure (1) est soumis à un traitement thermique en profondeur avec chauffage jusqu'au-delà de la température de transformation, trempage et revenu.

2. Procédé selon la revendication 1, **caractérisé en ce que** lors de l'estampage, les demi-coques de carrure (1a, 1b) sont estampées d'une seule pièce conjointement avec les surfaces de siège (5a, 5b) et les supports (4a, 4b).

3. Procédé selon les revendications 1 et 2, **caractérisé en ce que** lors de l'estampage, des demi-coques de col de boîtier (6a, 6b) sont forgées d'une seule pièce sur les demi-coques carrure (1a, 1b), et **en ce que** lors du soudage par faisceau d'électrons, les demi-coques de carrure (1a, 1b) pourvues de demi-coques de col de boîtier (6a 6b) forgées sont soudées pour former un boîtier avec un col, les cordons de soudure par faisceau d'électrons s'étendant entre les deux demi-coques de carrure (1a, 1b) et les deux demi-coques de col de boîtier (6a, 6b) dans le même plan.

4. Procédé selon la revendication 3, **caractérisé en ce que** lors de l'estampage, des rainures (7) sont réalisées dans les côtés intérieurs des demi-coques de col de boîtier (6a, 6b) pour recevoir une bague de support d'une fermeture de couvercle de col de boîtier à étanchéité propre.

5. Procédé selon la revendication 3, **caractérisé en ce que** lors de l'estampage, des éléments de guidage pour les plaques de vanne de la vanne d'arrêt haute pression sont incorporés par forgeage au niveau des côtés intérieurs des demi-coques de carrure (1a, 1b) et/ou des demi-coques de col de boîtier (6a, 6b).
